# EUROPEAN PATENT APPLICATION

(11) **EP 3 159 084 A1**
(43) Date of publication of application: **26.04.2017**
(21) Application number: 15306683.2
(22) Date of filing: 20.10.2015
(51) Int. Cl.: B22F 3/15, B22F 5/10, C22C 1/04, C22C 19/05, C22C 19/07

(54) **A RING FOR A PLAIN BEARING AND AN ATTACHING DEVICE INCLUDING THIS RING**

(71) Applicant: SKF Aerospace France, 26240 Saint-Vallier (FR)
(72) Inventor: DAYOT, Camille, 26000 VALENCE (FR); TURMEAU, Arnaud, 26120 MALISSARD (FR)
(74) Representative: Casalonga

(57) **Abstract**

A ring for a plain bearing, produced by a powder metallurgic technique of hot isostatic pressing (HIP), using a powder metallurgy component including a cobalt based alloy, and an attaching device comprising a shackle (2) provided with at least a ring mounted in a passage of the shackle so as to form an inner ring.

## Description

The present invention relates to the field of spherical plain bearings applied to connect components of aircraft structure together.

More particularly, the invention concerns engine attachments which comprise shackles carrying spaced apart inner rings, forming spherical plain bearings, and rods traversing and fixed to the inner rings, one of the rods being connected to the engine and the other rod being connected to the aircraft structure. Such attachments are able to allow the thermal expansion of the engine.

Usually, the shackles, as outer ring, are composed of NiCr19FeNb, known under the trademark Inconel 718, and the inner rings are composed of cobalt based alloy, such as CoCr29W5. The inner rings are produced by centrifugal casting method. But, this method produces a material which is porous and which presents big grains. Consequently, the inner rings are brittle. In static test, the rings break because of their low elongation. The overstress located on the sides of the rings leads to crack initiation. In endurance test (swiveling), the clearance quickly increases, both inner ring and outer ring wear. Cast CoCr29W5 shows higher wear rate than Inconel and drive the bearing wear by abrasive mechanisms, preventing from seizing. The complete assembly (shackle and inner ring) must be changed during maintenance due to high play in the assembly.

One object of the invention is to improve the properties of the material of rings such as inner rings of spherical plain bearings applied to engine attachments of aircraft.

According to one embodiment, it is proposed a ring for a plain bearing, produced by a powder metallurgical technique of hot isostatic pressing (HIP), using a powder metallurgy component including a cobalt based alloy.

The powder metallurgical technique of hot isostatic pressing (HIP) subjects powder to both elevated temperature and isostatic gas pressure in a high pressure containment vessel.

This technique allows to obtain a ring having a reduced porosity and also reduced grain and carbide size. The obtained microstructure is homogeneous and fine.

The obtained ring has better static properties, such as resistance and elongation. Thus, the bearing having such a ring can withstand higher loads and improves fatigue and contact fatigue properties.

The finer microstructure of the obtained ring can also help to improve tribological behavior of the bearing. A reduce wear rate of the ring and thus the bearing can be obtained.

HIP material finer carbides help to reduce abrasive wear of the other part of the bearing and a better sliding behavior is obtained, while the ring will be sacrificially worn out. This helps to proposed bearing maintenance service, with reduced cost, by ring replacement.

The ring can be composed of CoCr29W5.

The ring can have an outer spherical surface and an axial mounting bore.

According to another embodiment, it is proposed an attaching device, which comprises a shackle provided with at least an above ring, mounted in a passage of the shackle so as to form an inner ring.

The attaching device can comprise two inner ring mounted in spaced apart passages of the shackle.

The shackle can be composed of NiCr19FeNb.

The attaching device can be applied for connecting an engine and a structure of an aircraft.

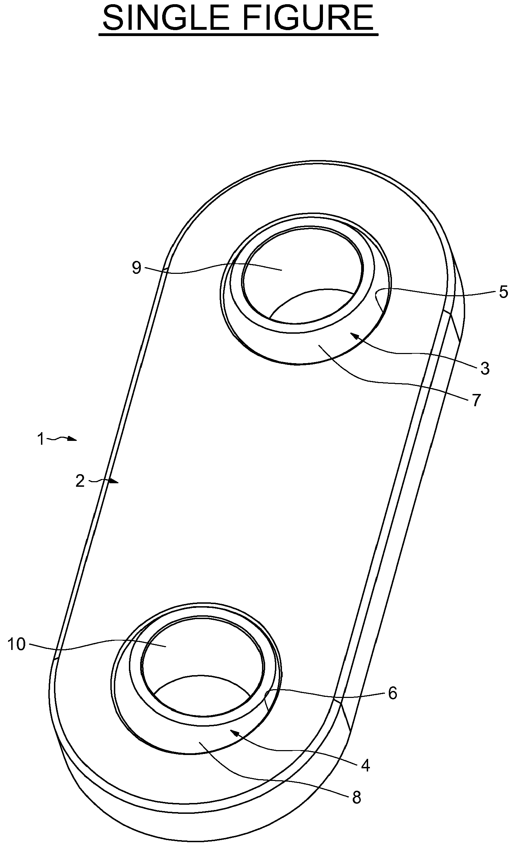

The present invention can be applied to a specific attaching device illustrated, as an example, on the single figure of the annexed drawing.

As illustrated, an attaching device 1 comprises an elongated shackle 2 having a substantially rectangular section and inner rings 3 and 4, as previously described, installed through spaced apart passages 5 and 6 provided through the opposed end portion of the shackle 2, in the direction of the thickness thereof.

The inner rings 3 and 4 have outer spherical surfaces 7 and 8 which cooperate with inner spherical surfaces of the passages 5 and 6 in order to constitute spherical plain bearings, the portions of the shackles adjacent to the passages 5 and 6 forming outer rings of these spherical plain bearings.

The inner rings 3 and 4 have axial cylindrical mounting bores 9 and 10 formed axially to the spherical surfaces 7 and 8. These bores 9 and 10 are made for the mounting of rods (not shown) therethrough.

The interface between the shackle 2 and the inner rings 3 and 4 can comprise a wear resistant or self-lubricating coating. This coating is carried by the shackle 2 or the inner rings 3 and 4.

These rods are respectively connected to an engine and a structure of an aircraft.

## Claims

1. A ring for a plain bearing, produced by a powder metallurgical technique of hot isostatic pressing (HIP), using a powder metallurgy component including a cobalt based alloy.

2. Ring according to claim 1, composed of CoCr29W5.

3. Ring according to claim 1 or 2, having an outer spherical surface and an axial mounting bore.

4. An attaching device comprising a shackle provided with at least a ring according to one of the preceding claims, mounted in a passage of the shackle so as to form an inner ring.

5. Attaching device according to claim 4, comprising two inner rings mounted in spaced apart passages of the shackle.

6. Attaching device according to claim 4 or 5, in which the shackle is composed of NiCr19FeNb.

7. Attaching device according to any one of the preceding claims 4 to 6, in which the interface between the shackle and the ring comprises a wear resistant or self-lubricating coating.

8. Attaching device according to any one of the preceding claims 4 to 7, for connecting an engine and a structure of an aircraft.
